# EUROPEAN PATENT SPECIFICATION

(11) **EP 1 153 897 B1**
(45) Date of publication and mention of the grant of the patent: **10.09.2003**
(21) Application number: 01110792.7
(22) Date of filing: 04.05.2001
(51) Int. Cl.: C03C 25/00, C03C 25/62, C03B 37/027

(54) **Method of manufacturing an optical fiber**
Verfahren zur Herstellung einer optischen Faser
Méthode de fabrication d'une fibre optique

(30) Priority: 08.05.2000 JP 2000134787
(43) Date of publication of application: 14.11.2001
(73) Proprietor: Kitagawa Industries Co., Ltd., Nagoya-shi 460-0012 (JP); Toyota School Foundation, Nagoya-shi, Aichi-ken 468-8511 (JP)
(72) Inventor: Ikushima, Akira, Nagoya-shi 468-0076 (JP); Saito, Kazuya, Toyota-Kodai Kuroishi Jutaku 12, Nagoya-shi 468-0028 (JP); Miura, Takashi, Nishikasugai-gun, Aichi-ken 481-0033 (JP); Nasuda, Shogo, Inazawa-shi, Aichi-ken 492-8137 (JP)
(74) Representative: Vetter, Hans, Dipl.-Phys. Dr.

(56) References cited:
- EP-A- 0 972 753
- US-A- 2 958 899
- US-A- 5 901 264
- US-A- 5 999 681

## Description

### BACKGROUND OF THE INVENTION

### Field of the Invention

The present invention relates to a method of manufacturing an optical fiber.

### Description of the Related Art

Optical fibers using silica glass fibers have been utilized for transmitting ultraviolet rays (hereinafter referred to as UV) (especially excimer laser beam), for example, in a photomask for excimer laser lithography, in a light guide for transmitting UV used to irradiate UV-hardening resin, and in the fields of microfabrication, medical treatment and the like.

When an optical fiber is used for transmitting UV, for example, to irradiate a UV-hardening resin, it is required to transmit UV with a shorter wavelength and higher power, so that the hardening time of the resin can be reduced. The peculiarity of short wavelength and high power of the UV must therefor be fully available.

However, when UV is transmitted through silica glass, a problem occurs that structural defects are formed in the silica glass, which decrease the transmittance. The decrease of transmittance of silica glass becomes more remarkable, as the wavelength of UV becomes shorter and its light power becomes higher. Therefore, when an excimer laser is used as a light source, the transmittance of silica glass becomes worse especially with KrF excimer laser (wavelength : 248nm) to F₂ excimer laser (wavelength : 157nm) including ArF excimer laser (wavelength : 193nm). The transmittance becomes worse when a laser of higher light power (one of various excimer lasers like KrF, ArF and F₂ ) is used as opposed to when a lamp of lower light power (a halogen lamp, a deuterium discharge lamp and the like) is used as a light source.

In order to reduce the decrease of transmittance of silica glass due to UV irradiation, or to improve resistance of silica glass to UV, a technique of increasing the hydroxyl group content of silica glass has been proposed in the publication of Japanese Unexamined Patent Application Hei 4-342427, the publication of Japanese Unexamined Patent Application Hei 4-342436, etc. However, when the hydroxyl group content is increased, the wavelength of UV absorption edge becomes longer, with a result that UV with short wavelength (especially, vacuum ultraviolet zone ) cannot be transmitted.

The solution to this problem was provided by a method (disclosed in EP-A-0972753) in which multiple structural defects are purposefully caused in silica glass by irradiating silica glass with UV, and in which the structural defects are removed by performing heat treatment simultaneously with or after the UV irradiation.

In applying this known method to a silica glass fiber, there occurred the following problems.

When UV with a high power is repeatedly irradiated through the end surface of a fiber to cause structural defects, deterioration occurs only at the irradiated end, and UV does not reach the other end. Therefore, aside from a short fiber, it is impossible to process a long fiber along it's entire length. Also cutting a long fiber into a plurality of short fibers (about 1m, for example) and processing these fibers one by one leads to an increase of costs, and is not appropriate for a long fiber.

On the contrary, when UV with a lower power is used for irradiating, a relatively long fiber can be processed, but the lower power requires a substantially long processing time and is thus unsuitable for mass production.

An alternative way of applying UV irradiation to an optical fiber laterally, i.e. from the side of the optical fiber, leads to other problems that an insulation coating (an outer protective coating) made of synthetic resin will be melted due to the heat by UV irradiation, and that a metal coating will prevent the UV from passing therethrough.

It is already known to use residual heat in a glass (optical) fiber from the drawing process for subsequent coating processes from US-A-2958899 or US-A-5999681 or for subsequent diffusion processes from US-A-5901264, however specific solutions in view of the above mentioned problems are not given or explained.

### SUMMARY OF THE INVENTION

It is an object of the invention to proved a method of manufacturing an optical fiber using silica glass whose properties have been changed by UV irradiation and heat treatment, the method facilitating efficient mass production of long optical fibers.

In order to achieve this object the invention provides a method according to claim 1 and a method according to claim 2.

### BRIEF DESCRIPTION OF THE DRAWINGS

The invention will now be described, by way of example, with reference to the accompanying drawings, in which:

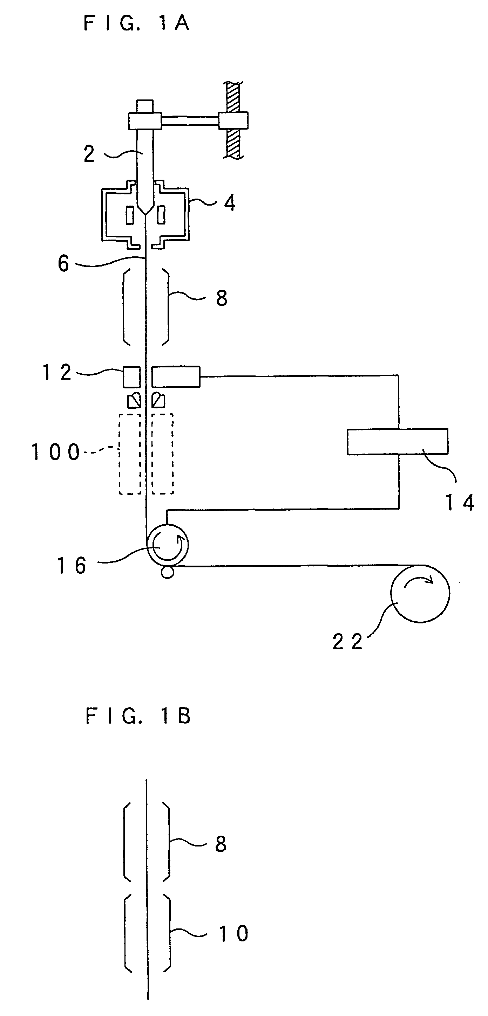

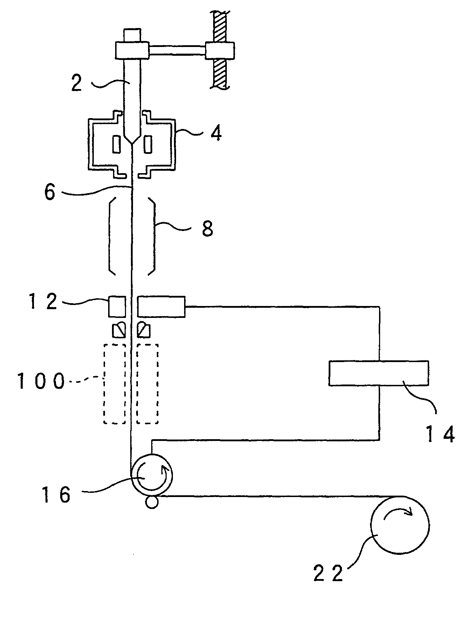

Fig. 1A is a diagrammatic view of an apparatus for carrying out the method of the present invention; and
Fig. 1B is a representation of a portion of fiber illustrating two stages of treatment.

### DETAILED DESCRIPTION OF THE PREFERRED EMBODIMENT

A method of manufacturing an optical fiber according to the present invention is embodied, for example, by the system shown in FIGS. 1A and 1B.

Referring to FIG. 1A, a base material of silica glass 2 is heated in a spinning furnace 4, and spinning is performed by drawing a silica glass fiber 6 from the point of the spinning furnace 4. In a UV irradiation zone 8, the silica glass fiber 6 which has been spun is irradiated with UV from its side, with a result that multiple structural defects are caused in the silica glass fiber 6.

These structural defects are removed by heat treatment, and the average bond angle of Si-O-Si network in the silica glass is increased compared with that before the heat treatment. As a result, structural relaxation proceeds to give structurally stable glass, and defects due to further UV irradiation are prevented from being formed. A silica glass fiber 6 having greater resistance to UV irradiation caused defects, compared with a silica glass fiber without UV irradiation and heat treatment performed, is thus obtained. Furthermore, increasing UV resistance according to this method results in preventing deterioration of transmittance of silica glass due to radioactive irradiation, that is, resistance to radiation can be improved.

When the residual heat from heating for fiber spinning is enough for the above described heat treatment, it is unnecessary to further heat the silica glass fiber 6. When the residual heat is not enough, the silica glass fiber 6 may be heated within a heating zone 10 provided subsequent to the UV irradiation zone 8, as shown in Fig. 1B.

When the silica glass fiber 6 irradiated with UV (and also heat treated in the example shown in Fig. 1B) passes through a fiber diameter measuring device 12, the fiber diameter is measured, and a fiber diameter controller 14 controls the rotating speed (spinning speed) of a capstan 16 based on the measured values. After passing through the fiber diameter measuring device 12, an insulation coating is applied to the fiber 6 by a coating device 20 to form a completed optical fiber, which is then wound up by a winder 22. The fiber diameter measuring device 12, the coating device 20, the fiber diameter controller 14, the capstan 16 and the winder 22 are similar to known ones, respectively, both in structure and in operation.

With respect to UV irradiation and heat treatment applied to a silica glass fiber 6, the following conditions and features are to be noted.

The wavelength of the UV to be irradiated is appropriately within 50nm-300nm, preferably within 130nm-250nm, and further preferably within 150nm-200nm. When the wavelength is above these ranges, the UV resistance and radiation resistance improving effects tend to decrease, and when the wavelength is below the range, the effectiveness of the UV resistance and radiation resistance improvement is limited.

The intensity of the UV to be irradiated is appropriately within 0.01mJ/cm²-1000mJ/cm², preferably within 1mJ/cm²-500mJ/cm², and further preferably within 1mJ/cm²-30mJ/cm². When the intensity is above these ranges, the deterioration of silica glass tend to increase, and when the intensity is below these ranges, the effectiveness of UV resistance and radiation resistance improvement tends to decrease.

As a UV source, which is not limited specifically, an ArF excimer laser, a KrF excimer laser, an excimer lamp, a deuterium lamp, and the like can be employed, for example.

UV irradiation must be continued long enough for structural defects to be caused (this can be confirmed by a decrease of the UV transmittance). In other words, it is necessary to continue UV irradiation until the decrease of the UV transmittance reaches a desired limit.

In the present invention, however, in which the silica glass fiber 6 is irradiated with UV while being spun, it is difficult to confirm during irradiation (spinning) whether the UV transmittance is decreased.

Therefore, it is preferable to previously determine an appropriate condition of irradiation based on an experiment or the like, considering the UV intensity, the spinning speed, and the material and the size of the silica glass fiber 6, then perform UV irradiation in accordance with the condition.

The temperature of the heat treatment is approximately from 100°C to 1600°C, preferably from 200°C to 1400°C, and further preferably from 300°C to 1300°C. When the temperature is outside these ranges, the UV resistance and radiation resistance improving effects tend to decrease. Accordingly, it is to be determined whether to provide the above mentioned heating zone depending on whether the temperature of the silica glass fiber 6 after enough UV radiation is performed, i.e. the temperature of the spun fiber due to the residual heat, is within these ranges.

The variation of bond angle of Si-O-Si network due to heat treatment (by the residual heat or further heating) can be confirmed by analyzing the peak point of infrared absorption around 2260cm⁻¹ in the infrared absorption measurement. Specifically, as the structural relaxation of the silica glass proceeds ( i.e. as the resistance to UV caused defects increases ), the peak point of infrared absorption around 2260cm⁻¹ in the infrared absorption measurement is shifted to a higher frequency side (shorter wavelength side) within the range from about 2255cm⁻¹ to about 2275cm⁻¹.

In the present invention, however, in which the silica glass fiber 6 is heat treated while being spun, it is difficult to confirm the variation of bond angle of Si-O-Si network by analyzing the peak point of infrared absorption in real time.

Therefore, when the heating zone is provided, it is required to determine the temperature of the heat source, the whole length of the heating zone, and the like considering the spinning speed of the silica glass fiber 6. It is preferable to previously determine an appropriate condition of heating based on an experiment or the like in the same way as in the case of UV irradiation, and perform heating in accordance with these conditions.

A known silica glass optical fiber has a three-layer structure which consists of a core, a clad, and an insulation coating in order from its center. The clad is made of fluorine-added silica glass, and the core is made of genuine silica glass, OH-group-added silica glass, or silica glass to which fluorine of a density lower than that in the clad is added. The present invention can be applied to an optical fiber using silica glass of other kinds as well as a known optical fiber such as the above.

Furthermore, there is no particular limitation to the material of the coating, although it is preferable to perform heating to remove structural defects before applying a insulation coating having low heat resistance (e.g. a resin coating) because relatively high temperatures are required for heat treatment (cf. FIG. 1B).

In contrast, an insulation coating of a material having high heat resistance (e.g. metals such as aluminum and gold) can well withstand high temperatures for heat treatment, and therefore heat treatment may be performed after applying the coating by a heating furnace 100, for example, arranged at the position indicated by dotted lines in FIG. 1A. Heat treatment can, of course, be performed before applying the coating. In brief, an insulation coating having good heat resistance provides the option of arranging the location of heat treatment.

Heating after UV irradiation is preferably but not restrictively by irradiation using an electric furnace, an infrared lamp and an infrared laser. At least, a noncontact heating method of radiation is desirable.

Also, since any metal coating is a good absorber of near infrared radiation, near infrared radiation should be used in the case of heating after applying a metal coating.

As described above, according to the manufacturing method of an optical fiber in the present invention, the UV resistance of the silica glass fiber 6 constituting the optical fiber is improved by irradiating UV to the silica glass fiber 6 to cause structural defects therein during spinning out of the base material and removing the structural defects by the residual heat from the fiber spinning process or further provided heat, thereby increasing the average bond angle of Si-O-Si network in the silica glass fiber 6 compared with that before heat treatment.

In the present method, UV is irradiated laterally, or from the side of the silica glass fiber 6, there is no limitation to the length of the silica glass fiber 6. This facilitates manufacturing of a long optical fiber using silica glass fiber 6 having high UV resistance.

Furthermore, what is necessary is just to provide a UV irradiation zone in the conventional manufacturing process of an optical fiber, and provide a separate heating zone only when heat treatment by the residual heat is not sufficient. Accordingly, existing equipment for manufacturing optical fibers can be used as it is and thus a new investment in equipment (UV irradiation equipment and heating equipment, if appropriate) can be minimized.

## Claims

1. A method of manufacturing an optical fiber including a silica glass fiber, the method comprising the steps of
irradiating a silica glass fiber spun out of a base material of silica glass with UV to purposefully cause multiple structural defects in said silica glass fiber;
removing said structural defects by the residual heat from the spinning process of said silica glass fiber or by the residual heat and further heating to improve UV resistance of said silica glass fiber; and
applying an insulation coating around said silica glass fiber, wherein the optional further heating to remove said structural defects is performed before or after applying the insulation coating.

2. A method of processing a silica glass fiber, defining a longitudinal axis, to decrease resistance to transmission of ultraviolet radiation through the fiber comprising the steps of:
a) spinning the silica glass fibers;
b) irradiating the spun fiber, transversely of the axis, to cause multiple structural defects adjacent the irradiated portion of the fiber;
c) using heat in the irradiated portion of the fiber to remove the structural defects to decrease resistance to transmission of ultraviolet radiation through said irradiated portion of the fiber;
d) continuing to irradiate the spun fiber as it passes through an irradiation location and using heat to remove structural defects so formed;
e) applying an insulation coating around said silica fiber, wherein optional further heating to remove said structural defects is performed before or after applying the insulation coating.

3. The method of claim 2 comprising heating the portions of fiber which have been irradiated to cause said structural defects to remove said defects.

## Patentansprüche

1. Verfahren zum Herstellen einer optischen Faser, welche eine Siliziumoxid-Glasfaser enthält, wobei das Verfahren die folgenden Schritte aufweist:
Bestrahlen einer aus einem Basismaterial aus Siliziumoxidglas gesponnenen Siliziumoxid-Glasfaser mit UV, um beabsichtigterweise mehrfache Strukturfehler in der Siliziumoxid-Glasfaser hervorzurufen;
Beseitigen der Strukturfehler durch die Restwärme von dem Spinnprozess der Siliziumoxid-Glasfaser oder durch die Restwärme und weiteres Erwärmen, um die UV-Beständigkeit der Siliziumoxid-Glasfaser zu verbessern; und
Anbringen einer Isolierbeschichtung um die Siliziumoxid-Glasfaser herum, wobei die optimale weitere Erwärmung zum Beseitigen der Strukturfehler vor oder nach dem Anbringen der Isolierbeschichtung durchgeführt wird.

2. Verfahren zum Verarbeiten einer Siliziumoxid-Glasfaser, wobei eine Längsachse bestimmt wird, um den Transmissionswiderstand ultravioletter Strahlung durch die Faser zu verringern, wobei das Verfahren die folgenden Schritte aufweist:
a) Spinnen der Siliziumoxid-Glasfasern;
b) Bestrahlen der gesponnenen Faser quer zur Achse, um mehrfache Strukturfehler neben dem bestrahlten Abschnitt der Faser hervorzurufen;
c) Verwenden von Wärme in dem bestrahlten Abschnitt der Faser, um die Strukturfehler zu beseitigen, um den Transmissionswiderstand ultravioletter Strahlung durch den bestrahlten Abschnitt der Faser zu verringern;
d) weiteres Bestrahlen der gesponnenen Fasern, wenn sie durch einen Bestrahlungsort hindurchtritt, und Verwenden von Wärme, um so gebildete Strukturfehler zu beseitigen;
e) Anbrinngen einer Isolierbeschichtung um die Siliziumoxidfaser herum, wobei eine optimale weitere Erwärmung zum Beseitigen der Strukturfehler vor oder nach dem Anbringen der Isolierbeschichtung durchgeführt wird.

3. Verfahren nach Anspruch 2, **dadurch gekennzeichnet, dass** die Faserabschnitte, welche bestrahlt wurden, um die Strukturfehler hervorzurufen, erhitzt werden, um die Fehler zu beseitigen.

## Revendications

1. Procédé de fabrication d'une fibre optique contenant une fibre de verre de silice, le procédé comprenant les étapes consistant à :
irradier aux UV une fibre de verre de silice filée à partir d'un matériau de base de verre de silice pour provoquer délibérément de multiples défauts de structure dans ladite fibre de verre de silice ;
éliminer lesdits défauts de structure par la chaleur résiduelle du processus de filature de ladite fibre de verre de silice ou par la chaleur résiduelle et un chauffage supplémentaire pour améliorer la résistance aux UV de ladite fibre de verre de silice, et
appliquer un revêtement isolant autour de ladite fibre de verre de silice, dans lequel le chauffage supplémentaire optimal pour éliminer lesdits défauts de structure est effectué avant ou après l'application du revêtement isolant.

2. Procédé de traitement d'une fibre de verre de silice, définissant un axe longitudinal, pour réduire la résistance à la transmission de rayons ultraviolets à travers la fibre comprenant les étapes consistant à :
a) filer les fibres de verre de silice ;
b) irradier la fibre filée, dans le sens transversal de l'axe, pour provoquer de multiples défauts de structure adjacents à la partie irradiée de la fibre ;
c) utiliser de la chaleur dans la partie irradiée de la fibre pour éliminer les défauts de structure afin de réduire la résistance à la transmission de rayons ultraviolets à travers ladite partie irradiée de la fibre ;
d) poursuivre l'irradiation de la fibre filée lorsqu'elle passe à travers un endroit irradié et utiliser la chaleur pour éliminer les défauts de structure ainsi formés ;
e) appliquer un revêtement isolant autour de ladite fibre de silice, dans lequel un chauffage supplémentaire optimal pour éliminer lesdits défauts de structure est effectué avant ou après l'application du revêtement isolant.

3. Procédé selon la revendication 2 comprenant le chauffage des parties de la fibre qui ont été irradiées pour provoquer lesdits défauts de structure afin d'éliminer lesdits défauts.
